# EUROPÄISCHE PATENTSCHRIFT

(11) **EP 1 752 647 B1**
(45) Veröffentlichungstag und Bekanntmachung des Hinweises auf die Patenterteilung: **02.06.2010**
(21) Anmeldenummer: 06016186.6
(22) Anmeldetag: 03.08.2006
(51) Int. Cl.: F02G 5/02, F24H 1/00

(54) **Kraft-Wärme-Kopplungsanlage**
Combined heat and power plant
Installation pour la production couplée de chaleur et d'électricité

(30) Priorität: 09.08.2005 DE 102005037540
(43) Veröffentlichungstag der Anmeldung: 14.02.2007
(73) Patentinhaber: ROBERT BOSCH GMBH, 70442 Stuttgart (DE)
(72) Erfinder: Waidner, Jürgen, 73249 Notzingen (DE)

(56) Entgegenhaltungen:
- DE-A1- 10 112 671
- FR-A- 2 854 229

## Beschreibung

Die Erfindung betrifft eine Kraft-Wärme-Kopplungsanlage mit einem Stirlingmotor und einem Heizgerät, nach dem Oberbegriff des Patentanspruches 1.

Gattungsgemäße Kraft-Wärme-Kopplungsanlagen, wie zum Beispiel der Stirlingmotor, sind Energiewandler mit äußerer, kontinuierlicher Verbrennung. Stirlingmotoren sind so genannte Heißgasmotoren, bei denen ein Arbeitsgas in einem geschlossenen Zylinder wechselseitig von außen auf der einen Seite gekühlt und auf der anderen Seite erhitzt wird. Dieses verschieben wird über einen Verdrängerkolben realisiert. Die hierdurch entstehende zyklische und idealerweise nahezu isotherme Kompression und Expansion des Arbeitsgases bewegt einen im Zylinder angeordneten Kolben, der die Bewegungsenergie auf Generatoren zur Stromerzeugung überträgt. Bei Stirlingmotoren wird die Energie über einen Brenner zugeführt. Dieser Brenner beheizt den so genannten Erhitzerkopf von außen. Als Antriebsenergie können auch prinzipiell alle festen, flüssigen und gasförmigen Brennstoffe, Abgase, Sonnenenergie und andere entsprechend temperierte exotherme chemische Reaktionen eingesetzt werden.

Nur ein Teil der vom Brenner freigesetzten Wärme kann vom Stirlingmotor aufgenommen werden. Daher wird der nicht vom Stirlingmotor genutzte Teil der Wärme in der Regel mit einem Wärmeübertrager einem Kühlmedium zugeführt. Im Zusammenhang mit Zentralheizungsanlagen in Gebäuden ist dies meistens der Heizungsrücklauf. Da alle Kraft-Wärme-Kopplungsanlagen üblicherweise für die Grundlastversorgung eines Gebäudes ausgelegt sind, insbesondere um lange Laufzeiten im Bereich des optimalen Wirkungsgrades zu erreichen, kombiniert man den Stirlingmotor mit einem zusätzlichen Wärmeerzeuger. Sobald die Wärmeleistung des Brenners am Stirlingmotor alleine nicht mehr zur Beheizung ausreicht, wird dann das Heizgerät in Betrieb genommen.

Es sind in Bezug auf die Nutzung der heißen Abgase zwei verschiedene Bauweisen für die Kombination von Stirlingmotor und Heizgerät als zusätzlicher Wärmeerzeuger bekannt, nämlich erstens mit jeweils einem separaten Wärmeübertrager für Stirlingmotor und Heizgerät und zweitens mit einem gemeinsamen Wärmeübertrager. Die Heizleistung des Stirlingbrenners ist für häusliche Anwendungen meist deutlich geringer als die Heizleistung des Heizgerätes, so dass der Wärmeübertrager eines Heizgerätes daher das Abgas des Stirlingmotors mit abkühlen kann.

So wird bei einem bekannten Konzept das heiße Abgas des Stirlingmotors im Bereich des Brenners in die Brennkammer des Heizgerätes eingeleitet. Wegen der unmittelbaren Nähe zum Brenner kann es aber dabei in einigen Betriebszuständen zu einer negativen Beeinflussung der Verbrennung kommen. Zum Beispiel tritt bei Gasbrennern ein Abheben der Flamme von der Brenneroberfläche auf, weil das Gemisch aus Brennstoff und Verbrennungsluft aufgrund partiell hoher Abgaskonzentrationen nicht ausreichend reagieren kann. Auch Überhitzungsschäden an Brennerbauteilen und hohe Abgasemissionswerte können unerwünschte Folgen sein, wenn beim bekannten Konzept nur der Stirlingmotor in Betrieb ist und eine Kühlung des Brenners durch das Gemisch aus Brennstoff und Verbrennungsluft in diesem Fall ausbleibt.

Aus der DE 101 12 671 A1 geht eine Vorrichtung zur Erwärmung von Brauchwasser mit einem Heizungsbrenner und zur Erzeugung von elektrischer Energie mittels eines Energiewandlers hervor. Dabei sind der Heizungsbrenner und der Wandlerbrenner in getrennten Brennräumen angeordnet und der Wärmetauscher zur Nutzung der Abwärme des Wandlerbrenners aus dem Wandlerbrennraum ist in einen Wärmetauscher für den Heizungsbrenner integriert.

Der Erfindung liegt die Aufgabe zugrunde, eine Kraft-Wärme-Kopplungsanlage, insbesondere mit einem Stirlingmotor und einem Heizgerät, im Hinblick auf die Nutzung eines gemeinsamen Wärmeübertragers zu optimieren.

Erfindungsgemäß wird dies mit den Merkmalen des Patentanspruches 1 gelöst. Vorteilhafte Weiterbildungen sind den Unteransprüchen zu entnehmen.

Die Kraft-Wärme-Kopplungsanlage ist **dadurch gekennzeichnet, dass** das Abgas des Stirlingmotors über einen Verdrängungskörper in Zentrum des Wärmeübertragers im Bereich der Wärmeübertragungsflächen des Wärmeübertragers in das Heizgerät geleitet wird. Durch diesen Abstand zum Brenner werden feuerungstechnische Einflüsse durch den Abgasstrom ausgeschlossen. Das Abgas des Stirlingmotors wird über einen Verdrängungskörper, welcher üblicherweise bei einem zylindrisch ausgeführten Wärmeübertrager im Zentrum der Wärmeübertragungsflächen zum Einsatz kommt, direkt in den Bereich der Wärmeübertragungsflächen geleitet.

Dazu besitzt der Verdrängungskörper im Bereich der Wärmeübertragungsflächen radial nach außen gerichtete Austrittsöffnungen für das Abgas des Stirlingmotors. Diese befinden sich in ausreichender Entfernung vom Brenner und der Brennkammer des Heizgerätes und/oder sind davon weggerichtet. Zwischen dem Stirlingmotor und dem Verdrängungskörper im Wärmeübertrager des Heizgerätes ist ein Verbindungskanal für das Abgas vorgesehen. Dieser besitzt eine Wärmeisolierung und/oder kann wassergekühlt sein. Alternativ oder ergänzend dazu kann die Verbrennungsluft für den Stirlingmotor vorgewärmt werden, indem sie an der Oberfläche des Verbindungskanals für das Abgas zwischen dem Stirlingmotor und dem Verdrängungskörper im Wärmeübertrager des Heizgerätes entlang geleitet wird.

Mit dem erfindungsgemäßen Aufbau wird eine Kraft-Wärme-Kopplungsanlage, insbesondere mit einem Stirlingmotor und einem Heizgerät, im Hinblick auf die Nutzung eines gemeinsamen Wärmeübertragers optimiert. Dadurch ergibt sich eine kompakte Bauweise und insgesamt eine kostengünstige Lösung, weil der Wärmeübertrager mit zwei verschiedenen Abgasströmen beaufschlagt werden kann. Die Verbrennung im Heizgerät bleibt von den zusätzlich eingeleiteten Abgasen des Stirlingmotors völlig unbeeinflusst, so dass niedrige Abgasemissionswerte immer gewährleistet sind und gleichzeitig Überhitzungsschäden an Brennerbauteilen des Heizgerätes sicher vermieden werden.

Es ergibt sich weiterhin ein modularer Aufbau, denn ein standardisierter Wärmeübertrager bzw. ein bestehendes Heizgerät kann durch Austauschen des Verdrängungskörpers und Einfügen eines entsprechenden Verbindungskanals sehr leicht mit einem Stirlingmotor gekoppelt werden.

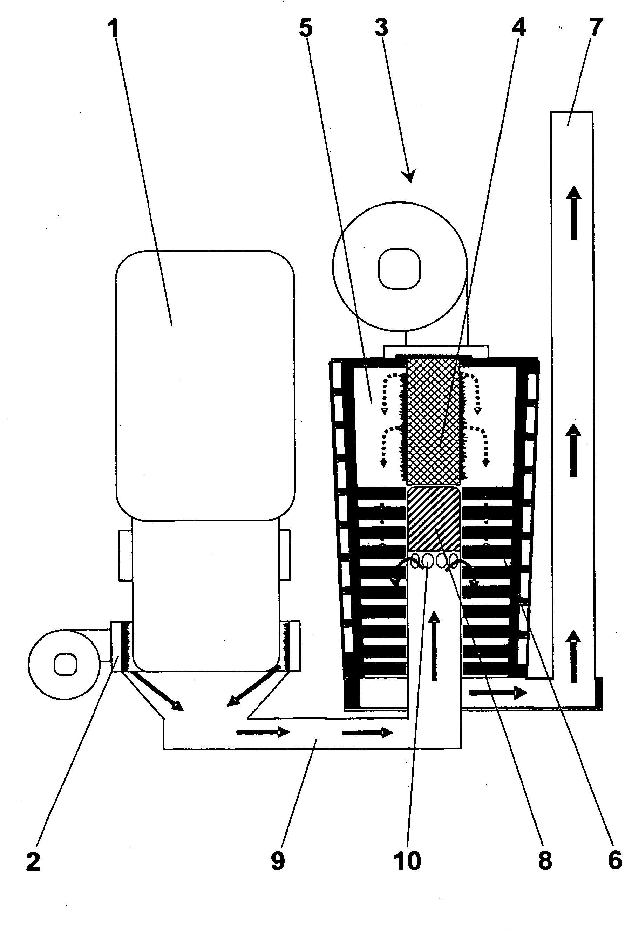

Die Zeichnung stellt ein Ausführungsbeispiel der Erfindung dar und zeigt in einer einzigen Figur einen Querschnitt durch eine Kraft-Wärme-Kopplungsanlage.

Die Kraft-Wärme-Kopplungsanlage besteht im Wesentlichen aus einem Stirlingmotor 1 mit einem Stirlingbrenner 2, sowie einem Heizgerät 3 mit einem Brenner 4, einer Brennkammer 5 und einem zylindrischen Wärmeübertrager 6. Die Heizgase durchströmen die Wärmeübertragungsflächen, ausgehend von der Brennkammer 5, von oben nach unten und gelangen in eine Abgasleitung 7.

Im Zentrum des Wärmeübertragers 6 ist ein Verdrängungskörper 8 angeordnet, welcher aus einem weitgehend geschlossenen, zum Brenner 4 gerichteten Endbereich und einem rohrförmigen unteren Bereich besteht. Dieser ist an einen Verbindungskanal 9 angeschlossen, durch den Abgas des Stirlingmotors 1 zugeführt wird. Im Bereich der Wärmeübertragungsflächen befinden sich in der Wand des Verdrängungskörpers 8 mehrere Austrittsöffnungen 10 für das Abgas, so dass es direkt seitlich in die Wärmeübertragungsflächen gelangt.

## Patentansprüche

1. Kraft-Wärme-Kopplungsanlage mit einem Stirlingmotor (1) und einem Heizgerät (3) als zusätzlicher Wärmeerzeuger sowie einem gemeinsamen Wärmeübertrager, wobei das Heizgerät (3) mit einem in einer Brennkammer (5) angeordneten Brenner beheizt wird und einen in Strömungsrichtung der Heizgase nachgeschalteten Wärmeübertrager (6) besitzt,
**dadurch gekennzeichnet, dass** der Wärmeübertrager in Zentrum der Wärmeübertragungsflächen einen Verdrängungskörper aufweist, wobei das Abgas des Stirlingmotors (1) über den Verdrängungskörper (8) in den Bereich der Wärmeübertragungsflächen des Wärmeübertragers (6) in das Heizgerät (3) geleitet wird und dass der Verdrängungskörper (8) im Bereich der Wärmeübertragungsflächen Austrittsöffnungen (10) für das Abgas des Stirlingmotors (1) besitzt.

2. Kraft-Wärme-Kopplungsanlage nach Anspruch 1,
**dadurch gekennzeichnet, dass** die Austrittsöffnungen (10) für das Abgas des Stirlingmotors (1) im Verdrängungskörper (8) vom Brenner (4) des Heizgerätes (3) entfernt angeordnet und/oder weggerichtet sind.

3. Kraft-Wärme-Kopplungsanlage nach den Ansprüchen 1 oder 2,
**dadurch gekennzeichnet, dass** ein wärmeisolierter Verbindungskanal (9) für das Abgas zwischen dem Stirlingmotor (1) und dem Verdrängungskörper (8) im Wärmeübertrager (6) des Heizgerätes (3) vorgesehen ist.

4. Kraft-Wärme-Kopplungsanlage nach einem der Ansprüche 1 bis 3,
**dadurch gekennzeichnet, dass** ein wassergekühlter Verbindungskanal (9) für das Abgas zwischen dem Stirlingmotor (1) und dem Verdrängungskörper (8) im Wärmeübertrager (6) des Heizgerätes (3) vorgesehen ist.

5. Kraft-Wärme-Kopplungsanlage nach einem der Ansprüche 1 bis 4,
**dadurch gekennzeichnet, dass** die Verbrennungsluft für den Stirlingmotor (1) vorgewärmt wird, indem sie entlang der Oberfläche des Verbindungskanals (9) für das Abgas zwischen dem Stirlingmotor (1) und dem Verdrängungskörper (8) im Wärmeübertrager (6) des Heizgerätes (3) geleitet wird.

## Claims

1. Combined heat and power plant comprising a Stirling engine (1) and a heater (3) as an additional heat generator as well as a common heat exchanger, wherein the heater (3) is heated by means of a burner arranged in the combustion chamber (5) and has a heat exchanger (6) downstream in the direction of flow of the heating gases, **characterised in that** the heat exchanger has a displacement body in the centre of the heat transfer surfaces, wherein the exhaust gas of the Stirling engine (1) is fed via the displacement body (8) in the region of the heat transfer surfaces of the heat exchanger (6) into the heater (3) and that the displacement body (8) has outlet openings (10) for the exhaust gas of the Stirling engine (1) in the region of the heat transfer surfaces.

2. The combined heat and power plant according to claim 1, **characterised in that** the outlet openings (10) for the exhaust gas of the Stirling engine (1) are arranged in the displacement body (8) remote from and/or directed away from the burner (4) of the heater (3).

3. The combined heat and power plant according to any one of claims 1 or 2, **characterised in that** a heat-insulated connecting channel (9) for the exhaust gas is provided between the Stirling engine (1) and the displacement body (8) in the heat exchanger (6) of the heater (3).

4. The combined heat and power plant according to any one of claims 1 to 3, **characterised in that** a water-cooled connecting channel (9) for the exhaust gas is provided between the Stirling engine (1) and the displacement body (8) in the heat exchanger (6) of the heater (3).

5. The combined heat and power plant according to any one of claims 1 to 4, **characterised in that** the combustion air for the Stirling engine (1) is preheated by being passed along the surface of the connecting channel (9) for the exhaust gas between the Stirling engine (1) and the displacement body (8) in the heat exchanger (6) of the heater (3).

## Revendications

1. Appareil de couplage force-chaleur comprenant un moteur Stirling (1) et un appareil de chauffage(3) comme générateur de chaleur supplémentaire ainsi qu'un échangeur de chaleur commun, l'appareil de chauffage (3) étant chauffé avec un brûleur disposé dans une chambre de combustion (5) et présentant un échangeur de chaleur (6) placé en aval dans le sens d'écoulement des gaz de chauffage,
**caractérisé en ce que** l'échangeur de chaleur présente un corps de refoulement au centre des surfaces de transmission de chaleur, les gaz brûlés du moteur Stirling (1) étant acheminés au moyen du corps de refoulement (8) dans la zone des surfaces de transmission de chaleur de l'échangeur de chaleur (6) dans l'appareil de chauffage (3) et **en ce que** le corps de refoulement (8) présente dans la zone des surfaces de transmission de chaleur des ouvertures de sortie (10) pour les gaz brûlés du moteur Stirling (1).

2. Appareil d'accouplement force-chaleur selon la revendication 1,
**caractérisé en ce que** les ouvertures de sortie (10) pour les gaz brûlés du moteur Stirling (1) sont disposées dans le corps de refoulement (8) à distance du brûleur (4) de l'appareil de chauffage (3) et/ou sont orientées en partant de ce brûleur.

3. Appareil de couplage force-chaleur selon les revendications 1 ou 2,
**caractérisé en ce qu'**un canal de liaison (9) isolé thermiquement pour les gaz brûlés est prévu entre le moteur Stirling (1) et le corps de refoulement (8) dans l'échangeur de chaleur (6) de l'appareil de chauffage (3).

4. Appareil de couplage force-chaleur selon l'une quelconque des revendications 1 à 3,
**caractérisé en ce qu'**un canal de liaison (9) refroidi par eau pour les gaz brûlés est prévu entre le moteur Stirling (1) et le corps de refoulement (8) dans l'échangeur de chaleur (6) de l'appareil de chauffage (3).

5. Appareil de couplage force-chaleur selon l'une quelconque des revendications 1 à 4,
**caractérisé en ce que** l'air de combustion pour le moteur Stirling (1) est préchauffé du fait qu'il est acheminé le long de la surface du canal de liaison (9) pour les gaz brûlés entre le moteur Stirling (1) et le corps de refoulement (8) dans l'échangeur de chaleur (6) de l'appareil de chauffage (3).
